(19) Europäisches Patentamt
European Patent Office
Office européen des brevets

(11) **EP 2 554 803 A1**

(12) **EUROPÄISCHE PATENTANMELDUNG**

(43) Veröffentlichungstag:
06.02.2013 Patentblatt 2013/06

(51) Int Cl.:
*F01K 3/00* (2006.01)    *F01K 23/06* (2006.01)

(21) Anmeldenummer: 11176292.8

(22) Anmeldetag: 02.08.2011

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **SIEMENS AKTIENGESELLSCHAFT**
**80333 München (DE)**

(72) Erfinder:
• **Hammer, Thomas**
  **91334 Hemhofen (DE)**
• **Most, Dieter**
  **91052 Erlangen (DE)**

• **Tackenberg, Martin**
  **91301 Forchheim (DE)**
• **Ahmad, Suhel**
  **47198 Duisburg (DE)**
• **Benthin, Harald**
  **47443 Moers (DE)**
• **Danov, Vladimir**
  **91056 Erlangen (DE)**
• **Gromoll, Bernd**
  **91083 Baiersdorf (DE)**
• **Kautz, Martin**
  **91056 Erlangen (DE)**
• **Schäfer, Jochen**
  **90402 Nürnberg (DE)**

(54) **Kreisprozessanlage und Kreisprozessverfahren**

(57)    Die Erfindung betrifft eine Kreisprozessanlage umfassend einen Brayton-Kreislauf (BRY) und einen Clausius-Rankine-Kreislauf (CRC), die in der Art einer Gas- und Dampfanlage miteinander zusammenwirken.

Zur Erhöhung der Flexibilität der Leistungsbereitstellung wird vorgeschlagen, dass ein thermischer Speicher (TS) die Abgaswärme aus dem Brayton-Kreislauf (BRY) vor Zuführung in den Clausius-Rankine-Kreislauf (CRC) zumindest teilweise zwischenzeitlich speichert.

FIG 1

**Beschreibung**

Die Erfindung betrifft eine Kreisprozessanlage umfassend einen Brayton-Kreislauf und einen Clausius-Rankine-Kreislauf, wobei der Brayton-Kreislauf eine Gasturbine aufweist, umfassend eine Expansionsturbine und einen Gasturbinenverdichter und einen Brenner, wobei der Clausius-Rankine-Kreislauf - in Strömungsrichtung eines Kreislauffluids wiedergegeben - eine Dampfturbine, einen Kondensator, eine Speisepumpe und einen Kessel zur Dampferzeugung für die Dampfturbine aufweist, wobei der Kessel mittelbar oder unmittelbar mit einem Abgas aus der Gasturbine beheizt wird. Gleichermaßen betrifft die Erfindung ein Kreisprozessverfahren zum Betrieb der Kreisprozessanlage.

Kreisprozesse der eingangs genannten Art sind bereits bekannt durch sogenannte Gas- und Dampfkraftanlagen, welche auch als "Combined Cycle" bezeichnet werden. Eine Gasturbine, welche in moderner Bauart für sich genommen einen Wirkungsgrad von etwa 35 - 40% aufweist, erzeugt heißes Abgas, das zur Dampferzeugung für eine Dampfturbine genutzt wird. Derartige Anlagen sind in unterschiedlicher Bauweise bekannt, beispielsweise als eine Wellenanlage, bei der die Gasturbine und die Dampfturbine und ggf. ein Generator einen einzigen axialen Rotorstrang bilden, der ggf. durch eine Überholkupplung zwischen der Gasturbine und der Dampfturbine getrennt werden kann, so dass die Gasturbine getrennt von der Dampfturbine auf Nenndrehzahl hochgefahren werden kann und anschließend bei hinreichender Dampfleistung auch die Dampfturbine aufgewärmt und hochgefahren werden kann. Auch andere Turbosatzlayouts sind bekannt, bei denen ggf. mehrere Gasturbinen mit ihrem Abgas einen Kessel für eine einzige Dampfturbine beheizen. Die modernsten derartigen Anlagen erreichen bereits Wirkungsgrade von über 60%.

Insbesondere im Zusammenhang neuster Energieversorgungskonzepte unter Einbindung der regenerativen Energieerzeugung ist neben dem Wirkungsgrad unter Grundlastbedingungen einer derartigen Anlage die Flexibilität der Fahrweise und der Leistungsabgabe mindestens ebenso wichtig. Während unter optimalen Betriebsbedingungen die beschriebenen Anlagen des Standes der Technik großartige Wirkungsgrade erzielen sind die Wirkungsgrade unter Teillastbedingungen bisweilen verbesserungswürdig. Daneben ist in Anbetracht der Stabilitätsanforderung an das Stromnetz und der zunehmend schwankenden Leistungseinspeisung dem Optimierungsbedarf hinsichtlich einer Flexibilität der Fahrweise keine Grenze gesetzt, so dass jeder Verbesserungsimpuls zur Flexibilisierung bzw. zur Umsetzung maximaler Leistungstransienten besonders wertvoll ist.

Ausgehend von dem eingangs beschriebenen Kreislaufprozess hat es sich die Erfindung zur Aufgabe gemacht die Flexibilität der Leistungsbereitstellung zu erhöhen unter Verbesserung der thermischen Wirkungsgrade, insbesondere im Teillastbereich.

Zur erfindungsgemäßen Lösung des vorgenannten Problems wird eine Kreisprozessanlage gemäß der eingangs genannten Art vorgeschlagen mit den zusätzlichen Merkmalen des Kennzeichens des Anspruchs 1. Daneben wird ein Kreisprozessverfahren gemäß Anspruch 15 zur Lösung der vorgenannten Aufgabe vorgeschlagen.

Eine erfindungsgemäße Kreisprozessanlage umfasst gegenständlich sämtliche in Anspruch 1 und sämtlichen rückbezogenen Unteransprüchen erwähnte Vorrichtungskomponenten in dem jeweils beanspruchten Umfang.

Der gegenständliche beanspruchte Clausius-Rankine-Kreislauf umfasst gegenständlich eine Dampfturbine zur Expansion des Dampfes, einen Kondensator zur Kondensation des expandierten Dampfes nach der Dampfturbine, eine Speisepumpe zur Förderung des kondensierten Kreislauffluids auf ein höheres Druckniveau und einen Kessel zur Verdampfung und ggf. Überhitzung des Kreislauffluids vor Eintritt in die Dampfturbine. Der Kessel umfasst in der von dieser Patentanmeldung gewählten Begrifflichkeit sowohl den Verdampfer als auch ggf. einen Überhitzer jeweils zur Dampferzeugung aus dem Kreislauffluid des Clausius-Rankine-Kreislaufs. Die Beheizung des Kessels mittelbar oder unmittelbar mit einem Abgas aus der Gasturbine bedeutet, dass der Kessel zumindest teilweise mit dem Abgas aus der Gasturbine beheizt wird. Eine weitere Wärmequelle zur Beheizung des Kessels ist hierdurch nicht ausgeschlossen.

Hingegen ist im Kennzeichen des Anspruchs 1 bzw. des Anspruchs 15 neuartige Kreislauf sieht vor, dass ein Aufteilungsaggregat den Abgasstrom zumindest teilweise statt direkt durch den Abhitzekessel - wie bei herkömmlichen "Combined Cycle"-Anlagen übliche - zunächst in einem thermischen Speicher einleitet, so dass die Gasturbine insbesondere instationären Betriebszuständen weitestgehend entkoppelt von der Dampfturbine flexibel betrieben werden kann und die Dampfturbine mit ihrem längeren Anfahr- und Aufheizphasen kontrolliert unter Freisetzung der in dem thermischen Speicher gespeicherten Wärmeenergie hochgefahren werden kann. Auf diese Weise ist die Gesamtanlage um eine Größenordnung flexibler an Spitzenlast- und Teillastzustände anpassbar, so dass Erhöhungen der Leistungsbereitstellung und Lastabwürfe Materialschonend durchgeführt werden können. Insbesondere die Dampfturbine kann unter Berücksichtigung sämtlicher thermisch bedingter Zeitanforderungen derart betreiben werden, dass insbesondere die radialen Laufspiele in Dichtungen der Beschaufelung und der Wellendichtungen minimal dimensioniert werden dürfen. Derartige Betriebsmöglichkeiten erhöhen damit unmittelbar auch den Wirkungsgrad im Spitzenlastbereich in Folge des verringerten Spielbedarfs.

Eine vorteilhafte Weiterbildung der Erfindung sieht vor, dass der Kessel ein Verdampfer und einen Überhitzer aufweist, so dass die Dampfturbine mit überhitztem Dampf bis an die Grenze der materialbedingten Möglichkeiten zur Erhöhung des grenzbildenden Carnot-Wirkungsgrades betrieben werden kann.

Mit Vorteil kann die vierte Leitung von dem thermischen Speicher zu dem Kessel direkt mit dem Überhitzer des Kessels verbunden sein und die zweite Leitung kann dem Aufteilungsaggregat zu dem Kessel direkt mit dem Verdampfer des Kessels verbunden sein, so dass die thermische Energie zur Überhitzung des erzeugten Dampfes aus dem Verdampfer ausschließlich aus dem thermischen Speicher kommt. Diese Anordnung hat bei einem besonders hohen Temperaturniveau des thermischen Speichers einen verhältnismäßig geringen Exergieverlust zur Folge, da die Grädigkeit des Wärmeübertragers im Überhitzer gering gewählt werden kann.

Eine Alternative zweckmäßige Weiterbildung der Erfindung sieht vor, dass die vierte Leitung direkt mit dem Verdampfer des Kessels verbunden ist und die dritte Leitung mit dem Überhitzer. Diese Lösung hat insbesondere bei einem etwas niedrigerem Temperaturniveau des thermischen Speichers den Vorteil, dass der Exergieverlust in Folge einer nur verhältnismäßig niedrigen Grädigkeit des Wärmeübertragers des Verdampfers im Rahmen der Wärmeübertragung zwischen dem Wärmetauschermedium des thermischen Speichers und dem Kreislauffluid des Clausius-Rankine-Prozesses im Rahmen der Verdampfung gering gewählt werden kann.

Bevorzugt ist das Aufteilungsaggregat derart ausgebildet, dass das Verhältnis des ersten Abgasstromes zu dem zweiten Abgasstrom beliebig einstellbar ist.

Zweckmäßig ist das Aufteilungsaggregat derart ausgebildet, dass das Verhältnis des ersten Abgasstromes zu dem zweiten Abgasstrom zwischen 0 und unendlich eingestellt werden kann. Hierzu sind an dem Aufteilungsaggregat entsprechend strömungstechnische Ausbildungen vorgesehen, wie beispielsweise Ventile oder Umlenkklappen, die jeweils die Abgasströme in die eine oder andere Richtung vollständig oder teilweise umlenken können. So wird es möglich, dass die Gasturbine betrieben wird, ohne die Dampfturbine aufheizen oder anfahren zu müssen, indem die Wärmeenergie des gesamten Abgasstromes zunächst in dem thermischen Speicher zwischengespeichert wird. Alternativ kann in Ausnahmefällen auch der gesamte Abgasstrom EX ausschließlich direkt dem Kessel zugeführt werden. Hierbei kann es sinnvoll sein, dass eine Leitung als Bypass BYP absperrbar vorgesehen ist, welche dem thermischen Speicher TS für den zweiten Abgasstrom EX2 zur direkten Beheizung eines ggf. alternativen zweiten Überhitzers bypasst. Somit ist es möglich, dass die Gesamtanlage im stationären Betrieb unter ausgewählten Betriebsrandbedingungen wie eine herkömmliche "Combined Cycle"-Anlage betrieben wird.

Besonders zweckmäßig ist eine Ausbildung des thermischen Speichers derart, die Durchflussmenge durch die vierte Leitung einstellbar ist. Zweckmäßig wird das Wärmetauschermedium mittels einer Pumpe durch die vierte Leitung gefordert, so dass die Pumpe ggf. durch einen Frequenzumformer derart in ihrer Drehzahl angepasst werden kann, dass die Fördermenge des Wärmetauschermediums gezielt für eine Temperatur in dem mittels des Wärmetauschermediums beheizten Teil des Kessels anpassbar ist. Auf diese Weise ist die Heizleistung des Wärmetauschers für den Kessel nahezu beliebig anpassbar in Abhängigkeit von der Temperatur des Wärmetauschermediums und der von dem Kessel angeforderten Heizleistung in Abhängigkeit von der für die Dampfturbine erforderlichen Dampfmenge und Temperatur. Der thermische Speicher kann hierbei eine besonders große thermische Pufferkapazität entfalten in Abhängigkeit von dem Wärmetauschermedium, das beispielsweise ein Öl oder ein Salz bzw. eine Salzschmelze sein kann. Bei einem Heißöltank als thermischen Speicher ist es denkbar, eine Speichertemperatur zwischen etwa 200°C und 400°C vorzusehen, wobei eine thermische Schichtung des Öles in dem Tank bei hinreichend hoher vertikaler Bauweise des Tankes zusätzliche Optionen ermöglicht, die Temperatur des Zuflusses zu dem Wärmetauscher des Kessels bei Anzapfung der verschiedenen Temperaturschichten des thermischen Speichers auszunutzen. Weiterhin ist es zweckmäßig, einen regelbaren Bypass des Rückflusses aus dem Kessel für das Wärmeträgermedium des thermischen Speichers in die vierte Leitung bzw. den Vorlauf vorzusehen, so dass die Temperatur und die Menge des Wärmetauschermediums in der vierten Leitung bzw. in dem Vorlauf in den Kessel hinein an Anforderungen des Kessels hinsichtlich Temperatur- und Durchflussmenge sowie Grädigkeit angepasst werden kann.

Eine vorteilhafter Weiterbildung der Erfindung sieht vor, dass zwischen der Gasturbine und der Dampfturbine mittelbar oder unmittelbar ggf. unter Zwischenanordnung weiterer Rotationsmaschinen eine Kupplung vorgesehen ist, welche eine mechanische Kopplung der Rotoren der Expansionsturbine der Gasturbine mit dem Rotor der Dampfturbine ermöglicht. Diese Kupplung ist zweckmäßig trennbar, damit die Gasturbine und die Dampfturbine unabhängig von einander betrieben werden können. Dies ist insbesondere beim Hochfahren des gesamten Wellenstranges zweckmäßig aus den bereits eingangs zum Stand der Technik erläuterten Gründen.

Bezug nehmend auf die Vorteile der vorhergehend beschriebenen Kupplung ist es sinnvoll, wenn ein Getriebe zwischen der Expansionsturbine der Gasturbine und der Dampfturbine vorgesehen ist, dass bei mechanischer Kopplung die beiden Rotoren mit unterschiedlichen Drehzahlen drehen lässt. Auf diese Weise kann ein optimierter Einzelwirkungsgrad der beiden Strömungsmaschinen umgesetzt werden.

Der erfindungsgemäße Kreislaufprozess kann mittels eines Clausius-Rankine-Prozesses betrieben werden, der als Kreislauffluid in herkömmlicher Weise Wasser benutzt. Hierbei ist es zweckmäßig, wenn die Frischdampftemperatur aus dem Kessel bis zu 600°C bis 700°C aufweist, damit der grenzbildende Carnot-Wirkungsgrad in Ausnutzung verfügbarer Materialien maximal ist. Bei Frischdampftemperaturen zwischen etwa 100°C bis 300°C kann der Clausius-Rankine-Kreislauf als sogenannter ORC bzw. Organic Ranking Cycle ausgebildet sein, bei dem das Kreislauffluid eine organische Flüssigkeit ist, welche sich durch bestimmte Siedetemperaturen, Verdampfungswärme und eine jeweils spezielle Ausbildung der Sattdampfkurve auszeichnet. Es ist weiterhin denkbar, dass der Clausius-Rankine-Kreislauf als Kalina-Kreisprozess ausgebildet ist mit einem Kreislauffluid als ein Gemisch aus Ammoniak und Wasser. Hierdurch können noch niedrigere Temperaturniveaus um beispielsweise 80°C bis 100°C bei noch verhältnismäßig gutem Wirkungsgrad genutzt werden.

Im Folgenden ist die Erfindung anhand von Ausführungsbeispielen unter Bezugnahme auf bildliche Darstellung zum Zwecke der Verdeutlichung beispielhaft dargestellt.

Es zeigen:

Figur 1     eine schematische Darstellung des Kreislaufprozesses in einer ersten Ausführung, wobei der Verdampfer mittels des thermischen Speichers beheizt wird,

Figur 2     eine alternative Ausführung des Kreislaufprozesses in schematischer Darstellung, wobei der Überhitzer des Kessels mittels des thermischen Speichers beheizt wird.

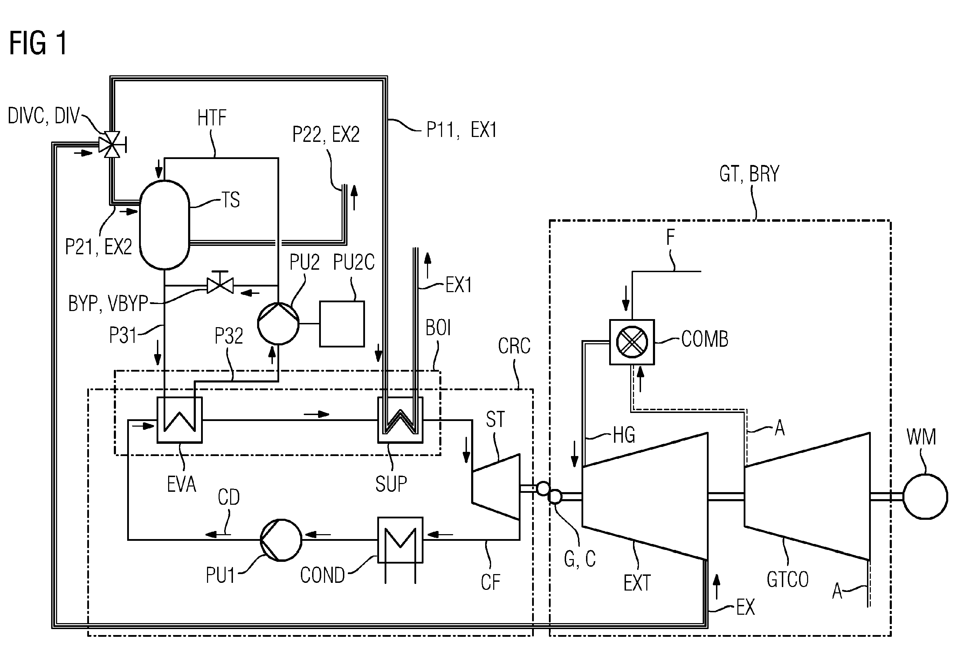

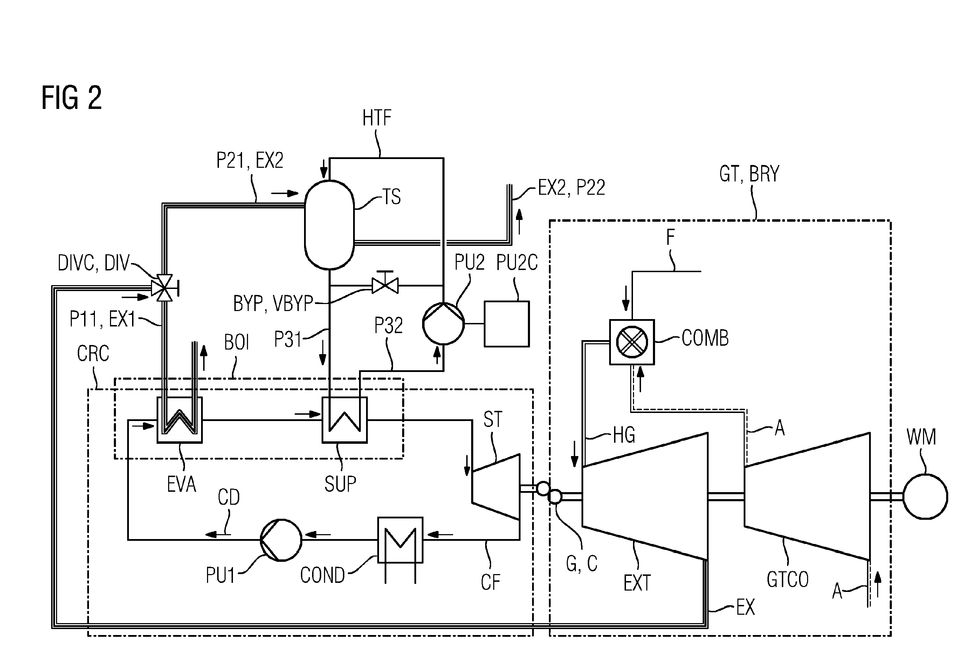

Die Figuren 1 und 2 geben jeweils eine schematische Darstellung des erfindungsgemäßen Kreislaufprozesses bzw. der erfindungsgemäßen Kreislaufprozessanlage und des Verfahrens wieder. Der erfindungsgemäße Kreislaufprozess umfasst einen Brayton-Kreislauf und einen Clausius-Rankine-Kreislauf CRC. In dem jeweils rechts dargestellten Brayton-Kreislauf ist eine Gasturbine vorgesehen, welche Gasturbine GT einen Gasturbinenverdichter GTCO und eine Expansionsturbine EXT vorsehen. Im erfindungsgemäßen Sinne ist das Wort "Kreislauf" nicht unbedingt als geschlossener Kreislauf aufzufassen - im Sinne eines geschlossenen Systems - sondern bezieht sich im Grunde auf den Betrieb einer Maschine mit einem Arbeitsfluid, welches ggf. einen Phasenwechsel vollzieht, wobei der Kreislauf thermodynamisch offen sein kann. Der Begriff des geschlossenen Kreislaufs bezieht sich hierbei auf eine Wiederkehr zu einem thermodynamischen Ausgangspunkt des Kreislauffluids bei Darstellung des Prozesses in einem thermodynamischen Zustandsdiagramm mit spezifischen Zustandsgrößen, z.B. einem Temperatur-Entropie-Diagramm. Beispielsweise ist in dem hier angeführten Brayton-Kreislauf das Ansaugen von Umgebungsluft A vorgesehen, welches im Sinne eines offenen Kreislaufes im späteren Verlauf des erfindungsgemäßen Kreisprozesses wieder in Form von Abgas in die Umwelt angegeben wird.

Die Gasturbine GT bzw. der Brayton-Kreislauf BRY saugt mittels des Gasturbinenverdichters DTCO Umgebungsluft A an, welche nach Beförderung auf ein höheres Druckniveau in einen Brenner COMB einmündet, der mittels eines Treibstoffs F befeuert wird. Das entstehende Heißgas HG wird in der Expansionsturbine EXT zu einem Abgas EX auf ein niedrigeres Druckniveau entspannt. Die schematische Darstellung der Gasturbine GT sieht vor, dass der Gasturbinenverdichter GTCO und die Expansionsturbine EXT einen gemeinsamen Wellenstrang aufweisen, der eine Arbeitsmaschine WM antreibt, die als Generator oder sonstiger Abtrieb ausgebildet sein kann. Als gleichberechtigte Alternative zu der Darstellung können die Expansionsturbine EXT und der Gasturbinenverdichter GTCO auch auf unterschiedlichen Wellen angeordnet sein, die ggf. keine oder eine andere mechanische Kopplung zueinander aufweisen, wobei in diesem Fall die Arbeitsmaschine WM an die Expansionsturbine direkt oder indirekt mechanisch angekoppelt wäre.

Das mittels der Gasturbine GT erzeugte heiße Abgas EX dient dem Betrieb des thermodynamisch angeschlossenen Clausius-Rankine-Kreislaufs CRC, welcher erfindungsspezifische Eigenarten aufweist. Das Abgas EX wird in einem Aufteilungsaggregat DIV, welches mittels einer Steuerung DIFC eine an die Betriebsparameter angepasste spezifische Aufteilung des Abgasstromes in einen ersten Abgasstrom EX1 und in einen zweiten Abgasstrom EX2 ermöglicht, aufgeteilt.

Die vereinfachte Darstellung des Clausius-Rankine-Kreislaufs CRC sieht als zentrale Elemente in Strömungsrichtung CD eines Kreislauffluids CF folgende Komponenten vor: Dampfturbine ST, Kondensator CON, Speisepumpe PU1, Kessel BOI. In der schematischen Darstellung und im Wesentlichen auch in der tatsächlichen Ausführung ist der Kreislauf des Kreislauffluids CF derart geschlossen, dass keine bedeutsamen Mengen dieses Kreislauffluids CF entweichen. Der Kessel BOI verdampft das Kreislauffluid CF in einem Verdampfer EVA und überhitzt den Dampf in einem anschließenden Überhitzer SUP vor dem Eintritt in die Dampfturbine ST. Nach Expansion in der Dampfturbine ST wird das Kreislauffluid CF in dem Kondensator COND kondensiert und abgekühlt, so dass es in der Speisepumpe PU1 auf ein höheres Druckniveau vor dem Eintritt in den Kessel BOI befördert wird. Das Kreislauffluid CF kann Wasser sein oder eine organische Flüssigkeit im Sinne eines Organic Ranking Cycles (ORC) oder ein Wasser-Ammoniak-Gemisch im Sinne eines Kalina-Kreislaufs. Grundsätzliche kommen auch andere geeignete Kreislauffluide CF in Frage.

Das regelbare Aufteilaggregat DIV ist mittels einer zweiten Leitung P21 zur Überführung des zweiten Abgasstromes EX2 mit einem thermischen Speicher TS verbunden, der im Sinne eines Wärmetauschers dem zweiten Abgasstrom EX2 Wärme zur Aufheizung eines Wärmetauschermediums HTF entzieht. Nach dem Wärmetausch wird der zweite Abgasstrom EX2 mittels einer dritten Leitung P22 in die Umgebung abgelassen oder nachfolgenden Wärmetauschprozessen zugeführt.

Mittels des thermischen Speichers TS wird der Kessel BOI über eine vierte Leitung P31 beheizt, wobei das nach der Beheizung des Kessels BOI abgekühlte Wärmetauschermedium HTF durch eine fünfte Leitung P32 mittels einer Wärmetauschermedienpumpe PU2 zurück in den thermischen Speicher TS gefördert wird. Der Kreislauf des thermischen Speichers TS weist zur Temperaturregelung des mit der vierten Leitung P31 vorgesehenen Vorlaufs in den Kessel BOI des Wärmetauschermediums HTF einen Bypass BYP zwischen Vorlauf und Rücklauf auf, der mittels eines Bypassventiles VBYP regelbar ist. Da der Bypass BYP direkt hinter der Wärmetauschermedienpumpe PU2 angeschlossen ist, ist in Folge des Druckverlustes in dem thermischen Speicher TS ein hinreichender Vordruck auf dem Bypass BYP vorhanden, der Triebkraft für eine Durchströmung des Bypasses BYP ist.

Die Wärmetauschermedienpumpe PU2 ist durch eine Wärmetauschermedienpumpenregelung PU2C gesteuert, welche in Abhängigkeit von den Anforderungen des Kessels BOI den Durchfluss des Wärmetauschermediums HTF durch die vierte Leitung P31 bzw. fünfte Leitung P32 steuert. Die Wärmetauschermedienpumpe PU2 ist hierbei zweckmäßig in der hinsichtlich des Wärmetauschers des Kessels BOI als Rücklaufleitung ausgebildeten fünften Leitung P32 angeordnet, weil dort die thermische Belastung geringer ist.

Ebenfalls der Beheizung des Kessels BOI dient der von dem zweiten Abgasstrom EX2 abgetrennte erste Abgasstrom EX1.

Die Figuren 1 und 2 unterscheiden sich darin, dass in Figur 1 die Leitung p11 direkt an den Überhitzer SUP angeschlossen ist. EX1 wird somit am Speicher TS vorbei direkt zum Überhitzer SUP geführt. P31 ist dagegen an den Verdampfer EVA des Kessels BOI angeschlossen. Das Speicherfluid HTF dient hier zur "Feuerung" des Verdampfers EVA. EX2 wird zum Betrieb des Speichers verwendet.

In Figur 2 ist wird dagegen EX1 über die Leitung p11 direkt zum den Verdampfer EVA des Kessels geführt. EX2 wird über Leitung p21 zum Speicher TS geleitet und dient zu wiederum zu dessem Betrieb. Die Leitung p31 ist nun an den Überhitzer angeschlossen. Der Überhitzer SUP wird damit über das Speichermedium HTF über Leitunng 31 "gefeuert".

Da beim Betreib des Speichers ein Temperaturverlust aufgrund der notwendigen Wärmeübertragung Von EX2 zu HTF stattfindet ist die Temperatur im Stoffstrom HTF in P31 immer geringer als im Gasstrom EX, EX2 und auch in EX1. Aus thermodynamischer sicht ist daher die Variante, die in Figur 1 dargestellt wird die effektivere. Hier wird der Stoffstrom HTF (Leitung P31) mit der niederen Temperatur zunächst dazu genutzt im Verdamper EVA das Arbeitsmedium möglichst weitgehend in den Dampfzustand zu überführen. Anschließend wird das Arbeitsmedium mit Hilfe des Stoffstroms (Leitung P11) mit der höheren Temperatur im SUP auf höhere Temperaturen überhitzt. So kann bei gegebener Wärmemenge Q und gegebenen Wärmeübergangskoeefizient alpha entweder eine höhere Überhitzungstemperatur bzw. eine kleinere Wärmetauschflächen A dargestellt werden (siehe auch

$$Q = \alpha \cdot A \cdot (T_1 - T_2) \cdot \Delta t).$$

**Patentansprüche**

1.   Kreisprozessanlage umfassend einen Brayton-Kreislauf (BRY) und einen Clausius-Rankine-Kreislauf (CRC),

- wobei der Brayton-Kreislauf (BRY) eine Gasturbine (GT) aufweist, umfassend eine Expansionsturbine (EXT) und einen Gasturbinenverdichter (GTCO) und einen Brenner (COMB),
- wobei der Clausius-Rankine-Kreislauf (CRC) - in Strömungsrichtung (CD) eines Kreislauffluids (CF)wiedergegeben - eine Dampfturbine (ST), einen Kondensator (COND), eine Speisepumpe (PU1) und einen Kessel (BOI) zur Dampferzeugung für die Dampfturbine (ST) aufweist,
- wobei der Kessel (BOI) mittelbar oder unmittelbar mit einem Abgas (EX) aus der Gasturbine (GT) beheizt wird, **dadurch gekennzeichnet, dass**
die Kreisprozessanlage (CRC) eine Hauptleitung (P00), eine erste Leitung (P11), eine zweite Leitung (P21), eine dritte Leitung (P22), eine vierte Leitung (P31), ein Aufteilungsaggregat (DIV), einen thermischen Speicher (TS), ein Wärmetauschermedium (HTF) umfasst, derart, dass
- das Abgas (EX) vor Eintritt in den Kessel (BOI) mittels der Hauptleitung (P00) in das Aufteilungsaggregat (DIV) geleitet wird, welches das Abgas (EX) in einen ersten Abgasstrom (EX1) und einen zweiten Abgasstrom (EX2) aufteilt,
- wobei der erste Abgasstrom (EX1) mittels der ersten Leitung (P11) direkt dem Kessel (BOI) zugeführt wird und der zweite Abgasstrom (EX2) mittels der dritten Leitung (P22) dem thermischen Speicher (TS) zugeführt wird, welcher thermische Speicher (TS) das Wärmetauschermedium (HTF) aufweist, das Wärmeenergie von dem zweiten Abgasstrom (EX2) aufnimmt und welcher mittels der vierten Leitung (P31) Wärmeenergie von dem thermischen Speicher (TS) auf den Kessel (BOI) überträgt.

2.   Kreisprozessanlage nach Anspruch 1, wobei der Kessel (BOI) einen Verdampfer (EVA) zur Verdampfung des Kreislauffluids (CF) und einen Überhitzer (SUP) zur Überhitzung des verdampften Kreislauffluids (CF) aufweist.

**3.** Kreisprozessanlage nach Anspruch 2, wobei die vierte Leitung (P31) mit dem Überhitzer (SUP) zur Beheizung verbunden ist und die erste Leitung (P11) mit dem Verdampfer (EVA) zur Beheizung.

**4.** Kreisprozessanlage nach Anspruch 2, wobei die vierte Leitung (P31) mit dem Verdampfer (EVA) zur Beheizung verbunden ist und die zweite Leitung (P12) mit dem Überhitzer (SUP) zur Beheizung.

**5.** Kreisprozessanlage nach einem der vorhergehenden Ansprüche, wobei der thermische Speicher (TS) derart ausgebildet ist, dass der Durchfluss an Wärmetauschermedium (HTF) durch die dritte Leitung (P31) einstellbar ist.

**6.** Kreisprozessanlage nach einem der vorhergehenden Ansprüche, wobei zwischen der Gasturbine (GT) und der Dampfturbine (ST), insbesondere zwischen der Expansionsturbine (EXT) und der Dampfturbine (ST), eine Kupplung (C) angeordnet ist, welche eine mechanische Kopplung eines Rotors der Expansionsturbine (EXT) mit einem Rotor der Dampfturbine (ST) ermöglicht.

**7.** Kreisprozessanlage nach Anspruch 6, wobei ein Getriebe (G) zwischen der Expansionsturbine (EXT) und der Dampfturbine (ST) vorgesehen ist, das bei mechanischer Kopplung die beiden Rotoren mit unterschiedlicher Drehzahl rotieren, wenn die Kupplung (C) eingekuppelt ist.

**8.** Kreisprozessanlage nach einem der vorhergehenden Ansprüche, wobei an die Expansionsturbine (EXT) ein Generator (G) oder eine Arbeitsmaschine (WM) mechanisch angekoppelt ist.

**9.** Kreisprozessanlage nach einem der vorhergehenden Ansprüche, wobei das Kreislauffluid (CF) eine organische Flüssigkeit ist.

**10.** Kreisprozessanlage nach einem der vorhergehenden Ansprüche 1 bis 9, wobei das Kreislauffluid (CF) ein Gemisch aus Ammoniak und Wasser ist.

**11.** Kreisprozessanlage nach einem der vorhergehenden Ansprüche, wobei das Wärmetauschermedium (HTF) ein Öl ist.

**12.** Kreisprozessanlage nach einem der vorhergehenden Ansprüche 1 bis 10,

wobei das Wärmetauschermedium (HTF) ein Salz und/oder eine Salzschmelze ist.

**13.** Kreisprozessanlage nach Anspruch 12, wobei das Kreislauffluid (CF) Wasser ist.

**14.** Kreisprozessverfahren, insbesondere zum Betrieb einer Kreisprozessanlage nach Ansprüchen 1 bis 13, Kreisprozessanlage umfassend einen Brayton-Kreislauf (BRY) und einen Clausius-Rankine-Kreislauf (CRC), wobei der Brayton-Kreislauf (BRY) eine Gasturbine (GT) aufweist, umfassend eine Expansionsturbine (EXT) und einen Gasturbinenverdichter (GTCO) und einen Brenner (COMB), wobei der Clausius-Rankine-Kreislauf (CRC) - in Strömungsrichtung (CD) eines Kreislauffluids (CF) wiedergegeben - eine Dampfturbine (ST), einen Kondensator (COND), eine Speisepumpe (PU1) und einen Kessel (BOI) zur Dampferzeugung für die Dampfturbine (ST) aufweist, wobei der Kessel (BOI) mittelbar oder unmittelbar mit einem Abgas (EX) aus der Gasturbine (GT) beheizt wird, **dadurch gekennzeichnet, dass**

- das Abgas (EX) vor Eintritt in den Kessel (BOI) in einen ersten Abgasstrom (EX1) und einen zweiten Abgasstrom (EX2) aufteilt wird,
- wobei der erste Abgasstrom (EX1) direkt dem Kessel (BOI) zugeführt wird und der zweite Abgasstrom (EX2) dem thermischen Speicher (TS) zugeführt wird, welcher thermische Speicher (TS) das Wärmetauschermedium (HTF) aufweist, das Wärmeenergie von dem zweiten Abgasstrom (EX2) aufnimmt und welcher Wärmeenergie von dem thermischen Speicher (TS) auf den Kessel (BOI) überträgt.

FIG 1

DIVC, DIV

HTF

P22, EX2

P11, EX1

GT, BRY

TS

F

P21, EX2

EX1

COMB

BYP, VBYP

PU2  PU2C

BOI

CRC

P31  P32

ST

HG

A

WM

EVA

SUP

CD

G, C

PU1  COND

CF

EXT

GTCO

A

EX

EP 2 554 803 A1

7

FIG 2

**Europäisches Patentamt**
**European Patent Office**
**Office européen des brevets**

# EUROPÄISCHER RECHERCHENBERICHT

**Nummer der Anmeldung**

EP 11 17 6292

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | JP 8 260912 A (TOSHIBA CORP) 8. Oktober 1996 (1996-10-08) * Zusammenfassung * ----- | 1-14 | INV. F01K3/00 F01K23/06 |
| A | WO 2011/077248 A2 (GOEBEL OLAF [AE]; AL ALI YOUSIF [AE]) 30. Juni 2011 (2011-06-30) * das ganze Dokument * ----- | 1-14 | |
| A | US 2008/148734 A1 (ALTHAUS ROLF [CH] ET AL) 26. Juni 2008 (2008-06-26) * das ganze Dokument * ----- | 1-14 | |

**RECHERCHIERTE SACHGEBIETE (IPC)**

F01K

Der vorliegende Recherchenbericht wurde für alle Patentansprüche erstellt

| Recherchenort | Abschlußdatum der Recherche | Prüfer |
|---|---|---|
| München | 8. August 2012 | Röberg, Andreas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 11 17 6292

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-08-2012

| Im Recherchenbericht angeführtes Patentdokument | Datum der Veröffentlichung | Mitglied(er) der Patentfamilie | Datum der Veröffentlichung |
|---|---|---|---|
| JP 8260912 A | 08-10-1996 | KEINE | |
| WO 2011077248 A2 | 30-06-2011 | KEINE | |
| US 2008148734 A1 | 26-06-2008 | CA    2591805 A1<br>EP    1828549 A2<br>US    2008148734 A1<br>WO    2006069948 A2 | 06-07-2006<br>05-09-2007<br>26-06-2008<br>06-07-2006 |

Für nähere Einzelheiten zu diesem Anhang : siehe Amtsblatt des Europäischen Patentamts, Nr.12/82

EPO FORM P0461